# EUROPEAN PATENT APPLICATION

(11) **EP 4 750 040 A1**
(43) Date of publication of application: **27.05.2026**
(21) Application number: 24909753.6
(22) Date of filing: 01.08.2024
(51) Int. Cl.: H04M 1/02

(54) **ELECTRONIC DEVICE**

(30) Priority: 27.12.2023 CN 202311834479
(71) Applicant: Honor Device Co., Ltd., Shenzhen, Guangdong 518040 (CN)
(72) Inventor: MAO, Chuncheng, Shenzhen, Guangdong 518040 (CN); MA, Dong, Shenzhen, Guangdong 518040 (CN); XU, Tao, Shenzhen, Guangdong 518040 (CN)
(74) Representative: Goddar, Heinz J.
(86) International application number: PCT/CN2024/109178
(87) International publication number: WO 2025/138799

(57) **Abstract**

This application relates to the field of terminal technologies, and in particular, to an electronic device. A screen component on the electronic device is stacked with a protection board of a battery of the electronic device along a thickness direction of the electronic device. Therefore, space above the protection board can be fully used, to avoid occupation in thickness space of the battery, thereby ensuring a dimension of the battery, so that a capacity of the battery is ensured, and standby time of the electronic device is extended.

## Description

This application claims priority to Chinese Patent Application No. 202311834479.4, filed with the China National Intellectual Property Administration on December 27, 2023 and entitled "ELECTRONIC DEVICE", which is incorporated herein by reference in its entirety.

### TECHNICAL FIELD

This application relates to the field of terminal technologies, and in particular, to an electronic device.

### BACKGROUND

Currently, in some electronic devices, a battery of an electronic device is located below a screen. To arrange a screen component (for example, a voltage stabilization capacitor of a screen power supply) of the electronic device as near as possible to a screen chip, the screen component and the battery need to be stacked along a thickness direction of the electronic device.

After the screen component and the battery are stacked, thickness space of the battery is occupied, and consequently, a thickness of the battery is reduced. After the thickness of the battery is reduced, a capacity of the battery is reduced, and consequently, standby time of the electronic device is shortened.

### SUMMARY

Embodiments of this application provide an electronic device, to prevent a screen component from occupying thickness space of a battery, so as to avoid a decrease in a thickness of the battery.

According to a first aspect, an embodiment of this application provides an electronic device, including: a screen and a housing, the screen and the housing being oppositely disposed along a thickness direction of the electronic device, to enclose an accommodation cavity of the electronic device; a battery assembly, the battery assembly being disposed in the accommodation cavity and being stacked with the screen along the thickness direction; and the battery assembly including a battery and a protection board of the battery, at least a first portion of the protection board being disposed on a side of the battery along a first direction, and the first direction being perpendicular to the thickness direction; and one or more screen components, the screen component being electrically connected to the screen, and at least a part of the one or more screen components being stacked with the first portion of the protection board along the thickness direction.

According to this implementation of this application, at least a part of the screen components of the electronic device are stacked with the protection board of the battery, so that internal space of the electronic device is fully used, and the screen component is prevented from affecting a thickness of the battery, thereby extending standby time of the electronic device.

In a possible implementation of the foregoing first aspect, the one or more screen components include a first component and a second component. One of the first component and the second component is stacked with the first portion of the protection board along the thickness direction, and a projection of the other of the first component and the second component along the thickness direction does not overlap a projection of the battery assembly along the thickness direction.

In some embodiments of this application, when a region of a part of the protection board is insufficient to place all the screen components, one part of the screen components may be stacked with the protection board along the thickness direction, and the other part does not overlap the battery assembly along the thickness direction.

In a possible implementation of the foregoing first aspect, the screen includes a display module and a screen chip disposed on the display module, and the screen chip is located in the accommodation cavity. The first component and the second component are both electrically connected to the screen chip, and a distance between the first component and the screen chip is less than a distance between the second component and the screen chip. The first component is a power supply protection component of the screen, and the second component is a touch control function control component of the screen.

In this embodiment of this application, because some screen components need to be disposed close to the screen chip, the screen components that need to be disposed close to the screen chip may be disposed as the first components close to the screen chip. However, some screen components that can be far away from the screen chip may be used as the second components, which are disposed far from the screen chip. In other words, the distance between the first components and the screen chip is less than the distance between the second components and the screen chip.

In a possible implementation of the foregoing first aspect, the first component is one of the following: a voltage stabilization capacitor of a power supply of the screen and a filter capacitor of the power supply of the screen; and/or the second component is one of the following: a touch control chip, a touch control protection component, and a clock chip.

In a possible implementation of the foregoing first aspect, the foregoing electronic device includes a first circuit board and a second circuit board, the screen is electrically connected to the first circuit board through the second circuit board, and the one or more screen components are disposed on the second circuit board.

For example, in this embodiment of this application, the screen is connected to the first circuit board through the second circuit board. The first circuit board may be a main board of the electronic device. The main board is electrically connected to the screen through the second circuit board, to control the screen. The second circuit board may be a flexible printed circuit board, to facilitate electrical connection between the main board and the screen.

In a possible implementation of the foregoing first aspect, the screen chip, the battery assembly, and the first circuit board are sequentially arranged along a length direction of the electronic device; where the first component is stacked with the protection board, and the second component is stacked with the first circuit board.

For example, in some embodiments of this application, the screen chip, the battery assembly, and the first circuit board are sequentially arranged along a length direction of the electronic device. For example, projections of the screen chip, the battery assembly, and the first circuit board do not overlap along the thickness direction of the electronic device.

In a possible implementation of the foregoing first aspect, the first direction is a width direction of the electronic device.

In a possible implementation of the foregoing first aspect, the housing includes a first side wall and a second side wall that are oppositely disposed along a length direction of the electronic device, the second side wall is closer to the screen chip than the first side wall, and an antenna of the electronic device is disposed on the first side wall.

In a possible implementation of the foregoing first aspect, the housing includes a third side wall and a fourth side wall that are oppositely disposed along the width direction of the electronic device, and the antenna of the electronic device is disposed on the third side wall and/or the fourth side wall.

In a possible implementation of the foregoing first aspect, the screen is a flexible screen. The screen includes a display portion and a bending portion connected to the display portion. The bending portion is located in the accommodation cavity, and the screen chip is disposed on the bending portion.

For example, in some embodiments of this application, an avoidance distance needs to be maintained between the display portion or the bent portion of the screen and a side wall (for example, the first side wall, the third side wall, or the fourth side wall) on which the antenna is disposed. The screen chip is disposed on the bent portion. Because the bent portion occupies a part of space, if the bent portion is disposed on the side wall on which the antenna is disposed and that is of the electronic device, a non-display region of the screen increases, and a screen-to-body ratio of the screen is reduced. Therefore, the bent portion may be disposed at a position close to the second side wall, and the antenna is not disposed on the second side wall. Therefore, a large distance does not need to be maintained between the bent portion and the second side wall, so that the increase of the non-display region of the screen can be avoided, to improve the screen-to-body ratio of the screen.

### BRIEF DESCRIPTION OF THE DISCLOSURE

FIG. 1A is a schematic diagram of an unfolded state of an electronic device according to some embodiments of this application;
FIG. 1B is a schematic diagram of an intermediate state of an electronic device according to some embodiments of this application;
FIG. 1C is a schematic diagram of a folded state of an electronic device according to some embodiments of this application;
FIG. 2A is a front view of a first body according to some embodiments;
FIG. 2B is a schematic diagram of a cross-section structure of a first body (a cross section view of A-A in FIG. 2A) according to some embodiments;
FIG. 2C is a diagram of an internal structure of a first body after a screen is removed according to some embodiments;
FIG. 3A is a front view of a first body of an electronic device according to some embodiments of this application;
FIG. 3B is a diagram of an internal structure of a first body after a screen is removed according to some embodiments of this application;
FIG. 3C is a cross-section view of a first body (a cross section view of C-C in FIG. 3B) according to some embodiments of this application;
FIG. 4 is a schematic diagram of a structure of a side wall in a first body according to some embodiments of this application;
FIG. 5A is a back view of a screen according to some embodiments of this application;
FIG. 5B is a cross section view of a screen (a cross section view of E-E in FIG. 5A) according to some embodiments of this application; and
FIG. 6 is a schematic diagram of an arrangement manner of a screen component (a cross section view of D-D in FIG. 3B) according to some embodiments of this application.

### DESCRIPTION OF EMBODIMENTS

Specific implementations of this application are described in detail below with reference to the accompanying drawings.

This application provides an electronic device. At least a part of screen components of the electronic device are stacked with a protection board of a battery, to fully use internal space of the electronic device and prevent the screen components from affecting a thickness of the battery, thereby extending standby time of the electronic device.

In the embodiments of this application, the electronic device may be an electronic device having a display function, such as a mobile phone, a tablet, a wearable device (for example, a watch), a large screen device, an augmented reality (augmented reality, AR)/virtual reality (virtual reality, VR) device, or a personal digital assistant (personal digital assistant, PDA), which is not limited in this application. An example in which a mobile phone is used as the electronic device is used for description below.

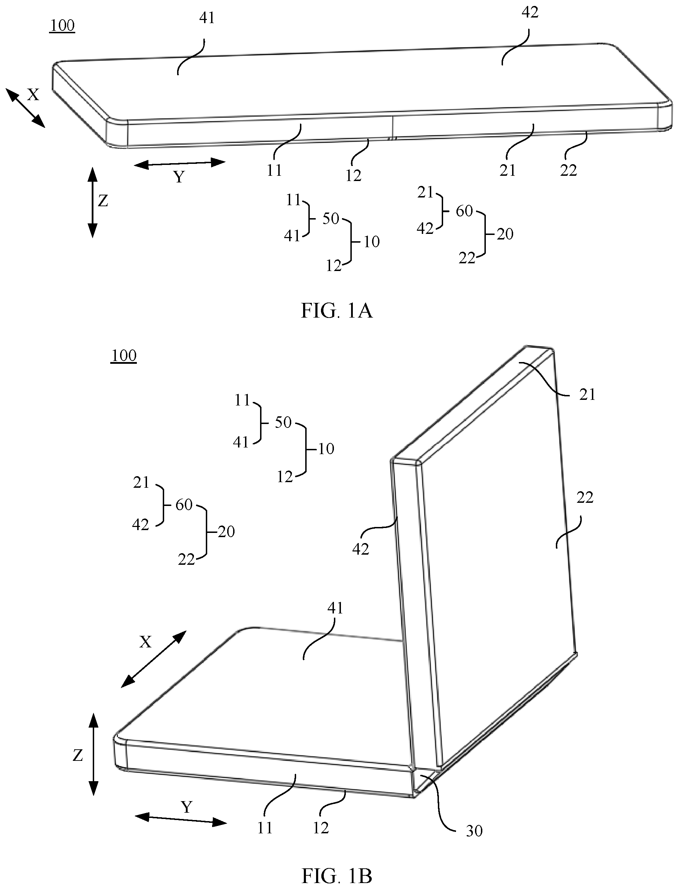

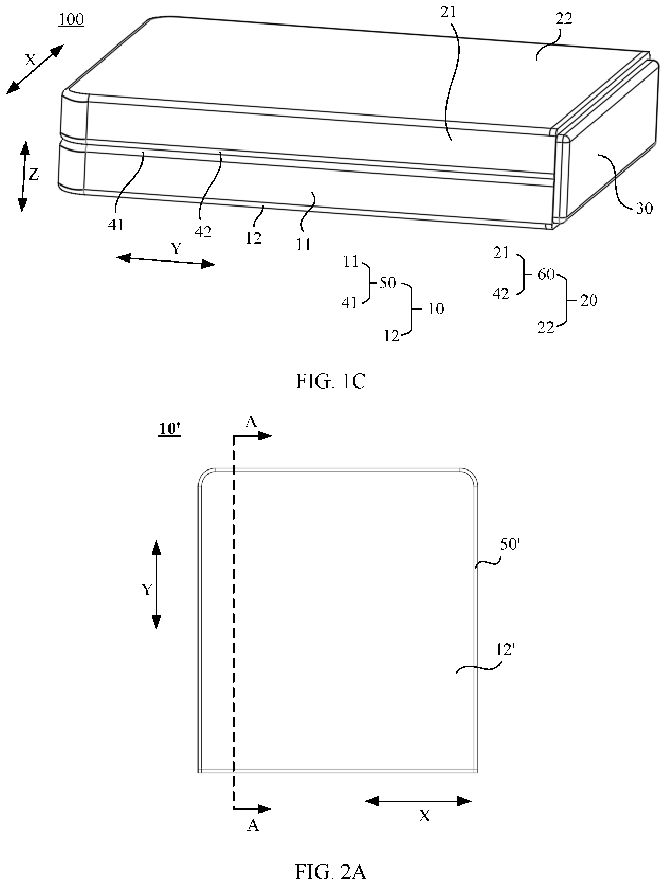

FIG. 1A to FIG. 1C are example diagrams of a structure of an electronic device 100 according to an embodiment of this application. The electronic device 100 is a foldable device. FIG. 1A is a schematic diagram of an unfolded state of the electronic device 100. FIG. 1B is a schematic diagram of an intermediate state of the electronic device 100. FIG. 1C is a schematic diagram of a folded state of the electronic device 100.

With reference to FIG. 1A to FIG. 1C, the electronic device 100 includes a first body 10, a second body 20, and a rotary shaft mechanism 30. The first body 10 and the second body 20 are connected through the rotary shaft mechanism 30, enabling relative rotation between the first body 10 and the second body 20, so that the electronic device can be switched between a folded state and an unfolded state.

In the figures of this specification, an X direction is a width direction (which may also be understood as an extension direction of a rotation axis of the rotary shaft mechanism 30) of the first body 10 of the electronic device 100, a Y direction is a length direction of the first body 10 of the electronic device 100, and a Z direction is a thickness direction of the first body 10 of the electronic device 100. The X direction, the Y direction, and the Z direction may be perpendicular to each other in pairs. It may be understood that, in a process in which the electronic device 100 is switched from the unfolded state to the folded state, a dimension of the entire electronic device 100 in the length direction gradually decreases, and a dimension of the entire electronic device 100 in the thickness direction first increases and then decreases.

For example, the first body 10 includes a first inner screen 41, a first middle frame 11, and a screen 12. The first inner screen 41 and the screen 12 are separately located on opposite sides of the first middle frame 11 along the Z direction. In this embodiment, the first inner screen 41 and the first middle frame 11 jointly form a first housing 50 (as an example of a housing of the electronic device) of the first body 10 of the electronic device 100, and the first housing 50 and the screen 12 are oppositely disposed along the Z direction, to enclose a first accommodation cavity (as an example of an accommodation cavity of the electronic device) of the first body 10 of the electronic device 100. For example, the screen 12 may be fixed to the first housing 50 through adhesive bonding.

In some other embodiments, the first housing 50 may alternatively be formed in another manner. For example, in some embodiments, the first housing 50 may not include the first inner screen 41, and instead, the first inner screen 41 is replaced with a rear cover. In this embodiment, the first housing 50 may be formed by connecting the first middle frame 11 to the rear cover. For another example, in some other embodiments, the first housing 50 may include a first middle frame 11, a rear cover, and a first inner screen 41. The first middle frame 11 is connected to the rear cover, and the first inner screen 41 covers the rear cover.

The second body 20 includes a second inner screen 42, a second middle frame 21, and a rear cover 22. The second inner screen 42 and the rear cover 22 are separately located on opposite sides of the second middle frame 21 along a thickness direction of the second body 20. In this embodiment, the second body 20 may have a structure similar to that of the first body 10. For example, the second inner screen 42 and the second middle frame 21 jointly form a second housing 60 of the second body 20, and the second housing 60 and the rear cover 22 are oppositely disposed along the thickness direction of the second body 20, to enclose a second accommodation cavity of the second body 20 of the electronic device 100.

The first inner screen 41, the second inner screen 42, and the screen 12 may all be touch screens. In some embodiments, the first inner screen 41 and the second inner screen 42 may be two portions of a same flexible screen. The flexible screen is also unfolded or folded in a process in which the electronic device 100 is unfolded or folded. In some other embodiments, the first inner screen 41 and the second inner screen 42 may alternatively be two screens physically independent of each other.

The screen 12 may be the flexible screen, or may be an inflexible screen. In some embodiments of this application, the screen 12 may be an organic light-emitting diode (organic light-emitting diode, OLED) display screen, an active-matrix organic light-emitting diode (active-matrix organic light-emitting diode, AMOLED) display screen, or the like, which is not limited in this application.

An internal structure of the electronic device 100 is described below by using the first body 10 of the electronic device 100 as an example. The second body 20 of the electronic device 100 may also have structure distribution the same as or similar to that of the first body 10, or may have a structure different from that of the first body 10, which is not limited in this application.

It may be understood that FIG. 1A to FIG. 1C are merely exemplary descriptions of the structure of the electronic device, and this application is not limited thereto. For example, in some other embodiments, the electronic device 100 may alternatively be a non-foldable device, an outward-foldable-screen device, an inward-foldable-screen device, or a triple-foldable device. When the electronic device is the non-foldable device, the electronic device may have the structure the same as or similar to that of the first body 10 in this embodiment of this application. When the electronic device is a foldable device in another manner, one body of the electronic device may have a structure the same as or similar to that of the first body 10 in this embodiment of this application.

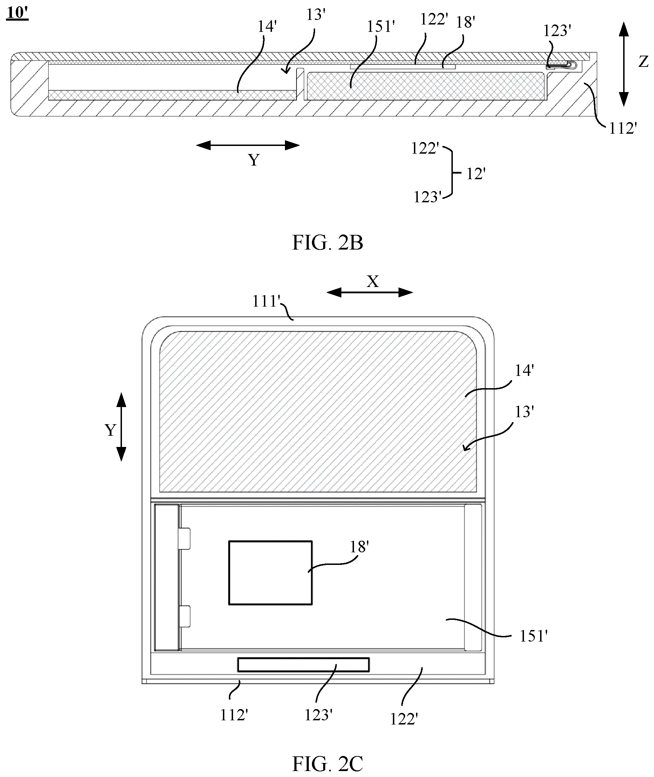

For ease of understanding, an exemplary structure of a first main body 10' in electronic devices according to some embodiments is first described with reference to FIG. 2A and FIG. 2B. FIG. 2A is a front view of the first body 10'. FIG. 2B is a schematic diagram of a cross-section structure of the first body 10' (a cross section view of A-A in FIG. 2A), and FIG. 2C is a diagram of an internal structure of the first main body 10' with a screen 12' removed.

With reference to FIG. 2A and FIG. 2B, the first body 10' includes a housing 50', the screen 12', a battery 151', and a main board 14'. The screen 12' covers the housing 50' along a Z direction, to enclose an accommodation cavity 13' with the housing 50'. The battery 151' and the main board 14' are sequentially disposed in the accommodation cavity 13' along a Y direction.

The screen 12' includes a display module 122' and a screen chip 123' disposed on the display module 122'. The screen chip 123' is located in the accommodation cavity 13' and is disposed close to a bottom wall 112' of the housing 50'.

An electronic device 100' further includes several screen components 18', and the screen components 18' are electrically connected to the screen chip 123' (where an electrical connection line is not shown in the figure). Some screen components 18' (for example, a voltage stabilization capacitor of a power supply of the screen 12') need to be connected as near as possible to the screen chip 123'. Therefore, the screen components 18' are disposed at a position of the battery 151'. In other words, the screen components 18' are disposed to be stacked with the battery 151' along the Z direction.

It may be understood that a thickness (that is, a height along the Z direction) of the battery 13' decreases because the screen components 18' need to be stacked with the battery 13' in the Z direction, and consequently, a capacity of the battery 13' is reduced. As a result, standby time of the electronic device 100' is reduced. In addition, in some cases, a certain avoidance distance needs to be maintained between the battery 13' and the screen components 18' along the thickness direction to ensure safety of the battery 13', and consequently, the thickness of the battery 13' is further reduced.

To resolve the foregoing problems, some embodiments of this application provide an electronic device, including a battery and a protection board configured to protect the battery. In addition, in this application, at least a part of screen components are stacked with the protection board of the battery, to fully use thickness space at a position of the protection board for arrangement of the screen components, so that the screen components are prevented from occupying space of the battery while a dimension of the battery does not need to be reduced, thereby extending standby time of the electronic device.

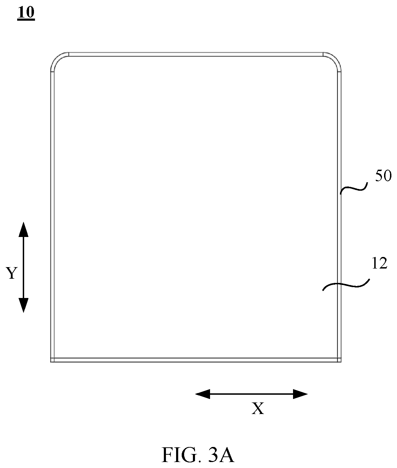

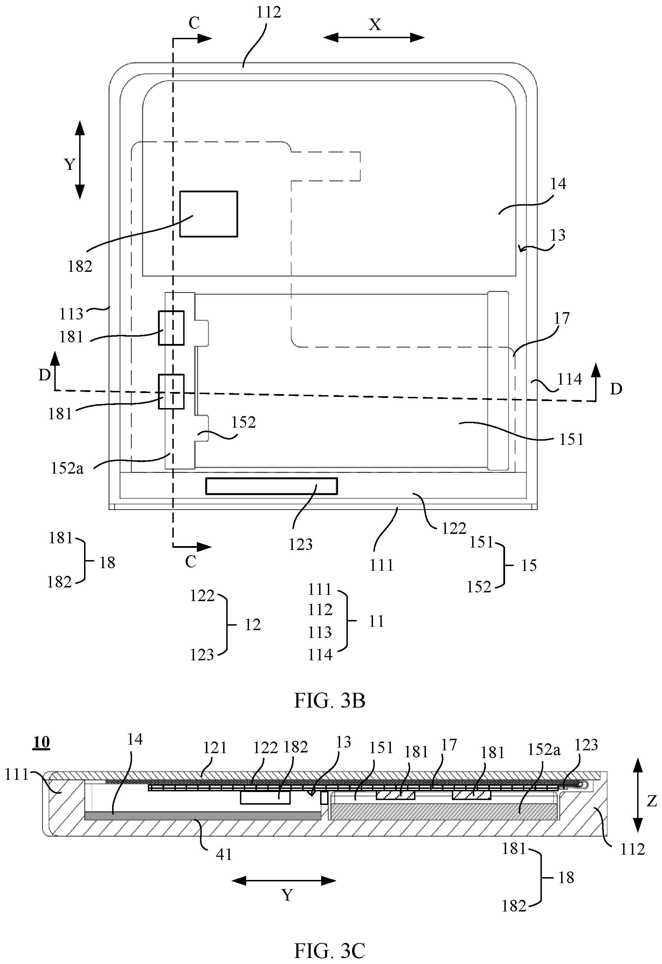

An exemplary structure of the first body 10 of the electronic device 100 provided in this embodiment of this application is described below with reference to FIG. 3A to FIG. 3C. FIG. 3A is a front view of the first body 10 of the electronic device 100. FIG. 3B is a diagram of an internal structure of the first body 10 after the screen 12 is removed. FIG. 3C is a cross-section view of the first body 10 (a cross section view of C-C in FIG. 3B).

In addition, for ease of description, in this specification, for each component inside the first body 10, a side of the component that faces the screen 12 along a Z-axis direction is referred to as "above" of the component, and a side of the component that faces the first inner screen 41 along the Z-axis direction is referred to as "below" of the component.

With reference to FIG. 3A, as described above, the first body 10 may include the first housing 50 (formed by connecting the middle frame 11 to the first inner screen 41) and the screen 12. With reference to FIG. 3B and FIG. 3C, the screen 12 and the first housing 50 are oppositely disposed along the thickness direction (for example, a Z direction in FIG. 3B) of the first body 10, to enclose a first accommodation cavity 13 of the first body 10.

With reference to FIG. 3B and FIG. 3C, the middle frame 11 may include a first side wall 111 and a second side wall 112 oppositely disposed along the Y direction, and a third side wall 113 and a fourth side wall 114 oppositely disposed along the X direction. The first side wall 111, the second side wall 112, the third side wall 113, the fourth side wall 114, and the first inner screen 41 may jointly form the housing 50. The screen 12 covers the first side wall 111, the second side wall 112, the third side wall 113, and the fourth side wall 114 along the Z direction, to enclose the first accommodation cavity 13 with the housing 50.

When a user uses the electronic device 100 (for example, when the user views a display interface of the screen 12), the first side wall 111 may be located above the electronic device 100, the second side wall 112 may be located below the electronic device 100, the third side wall 113 may be located on a left side of the electronic device 100, and the fourth side wall 114 may be located on a right side of the electronic device 100. Therefore, for ease of description, the first side wall 111, the second side wall 112, the third side wall 113, and the fourth side wall 114 may be respectively referred to as a top wall 111, a bottom wall 112, a left side wall 113, and a right side wall 114.

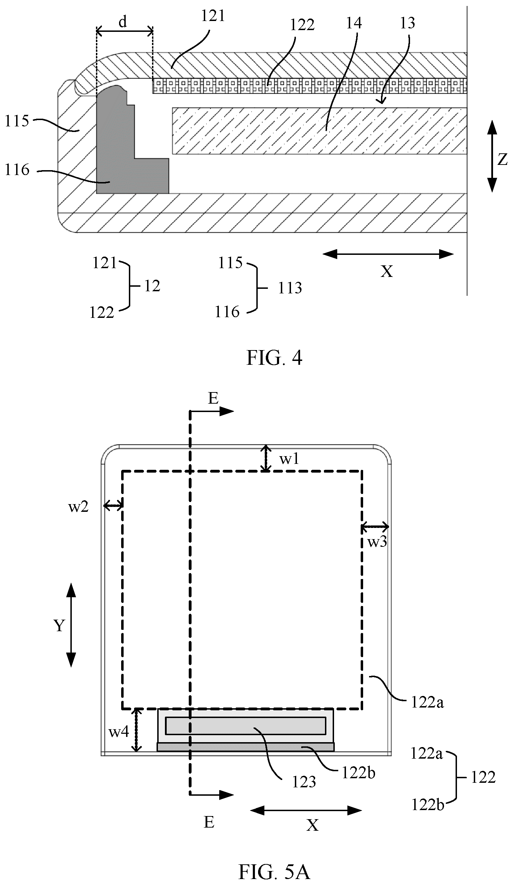

An antenna of the electronic device 100 may be disposed on the top wall 111, the left side wall 113, and/or the right side wall 114, to implement a wireless communications function between the electronic device 100 and another device. For example, the antenna is disposed on the left side wall 113. With reference to FIG. 4, the left side wall 113 may include a metallic layer 115 and a plastic layer 116 laminated to each other. In some embodiments, a pattern having a set shape may be processed on the metallic layer 115, so that the pattern has a function of radiating an electromagnetic wave of a particular frequency band, to enable a partial structure of the left side wall 113 to constitute an antenna radiator of the electronic device 100. In some other embodiments, the antenna radiator may alternatively be an independent component fixed to the left side wall 113, thereby disposing the antenna on the left side wall 113.

It may be understood that, in some embodiments, the antenna may be disposed on the top wall 111, the left side wall 113, and the right side wall 114. In some other embodiments, the antenna may be disposed on one or two of the top wall 111, the left side wall 113, and the right side wall 114. In addition, when being disposed on the left side wall 113 and/or the right side wall 114, the antenna may be disposed at a position close to the top of the first body 10 (in other words, the antenna is closer to the top wall 111 than the bottom wall 112).

With reference to FIG. 3B and FIG. 3C, in some embodiments of this application, a first circuit board is further disposed in the accommodation cavity 13. For example, the first circuit board may be a main board 14 of the electronic device. The main board 14 may include, for example, a printed circuit board (printed circuit board, PC) and components disposed thereon, such as a resistor, a capacitor, an inductor, a diode, a triode, a field-effect transistor, an interface component, a sensor, and an integrated circuit. The main board 14 processes internal and external signals and performs function control on electronic components of the electronic device 100, including display, charging, switching on/off, function application, and the like, through the foregoing components. In another embodiment, the first circuit board may alternatively be a circuit board other than the main board 14, for example, a screen-specific circuit board or a sub-board of the electronic device 100.

In some embodiments of this application, a battery assembly 15 is further disposed in the first accommodation cavity 13. The battery assembly 15 includes a battery 151 and a protection board 152 of the battery 151. The protection board 152 may be configured to protect the battery 151 and apply pressure to a contact of the battery 151, to improve reliability of electrical connection of the battery 151. For example, the protection board 152 may include a portion stacked with the battery 151 along the Z direction, and may further include a portion (where the portion is referred to as a first portion 152a of the protection board 152 in this specification) located on a side of the battery 151 along a first direction (where the first direction is perpendicular to the Z direction, for example, the first direction is the X direction or the Y direction). It may be understood that a projection of the first portion 152a of the protection board 152 along the Z direction does not overlap a projection of the battery 151 along the Z direction. In addition, in some examples, with reference to FIG. 3C, a thickness (a dimension of the first portion along the Z direction) of the first portion 152a of the protection board 152 is less than a thickness (a dimension of the battery along the Z direction) of the battery 151. However, this application is not limited thereto. In another example, the thickness of the first portion 152a of the protection board 152 may alternatively be equal to or slightly greater than the thickness of the battery 151.

In this embodiment, the battery 151 and the first portion of the protection board 152 are sequentially arranged along the X direction (for example, the first portion 152a of the protection board 152 and the battery 151 are respectively shown from the left to right in FIG. 3B). In some other embodiments, the battery 151 and the first portion 152a of the protection board 152 may alternatively be sequentially arranged along another direction perpendicular to the Z direction, for example, sequentially arranged along the Y direction. Relative positions of the first portion 152a of the protection board 152 and the battery 151 are not limited in this embodiment of this application.

Still with reference to FIG. 3A, the first body 10 also includes the screen 12. In this embodiment, the screen 12 may be a flexible screen, for example, an OLED screen. In addition, the screen 12 may further have a touch control function.

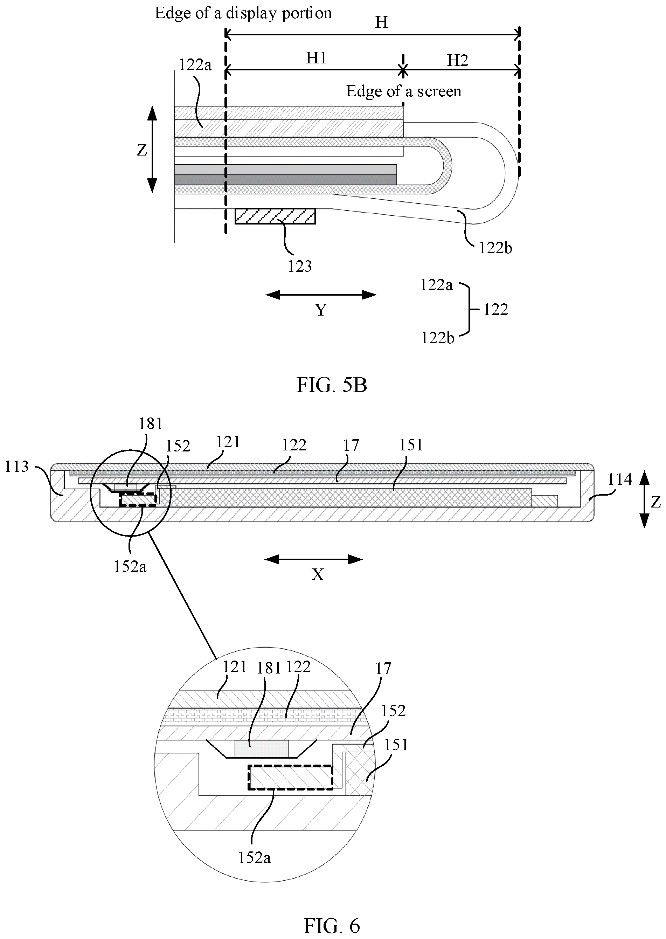

FIG. 5A shows a back view of the screen 12 (a side of the screen 12 facing the first accommodation cavity 13), and FIG. 5B is a cross section view of E-E in FIG. 5A. With reference to FIG. 5A and FIG. 5B, the screen 12 may include a cover plate 121 and a display module 122. The display module 122 includes a display portion 122a (or referred to as "AA") and a bending portion 122b (or referred to as "COP") that are connected to each other. The display portion 122a is a portion that is of the display module 122 and that is configured to display an image and receive a touch control operation of a user, and is usually exposed to the outside of the electronic device 100 and visible to the user. The display portion 122a may include a plurality of pixels arranged in an array, and the pixels may display different colors, so that the display portion 122a can display a predetermined interface image. A cable may be disposed on the bending portion 122b, and other components (for example, a main board or a display chip) in the electronic device 100 may be electrically connected to the display portion 122a through the cable, to control a pixel array in the display portion 122a. The bending portion 122b is usually hidden inside the electronic device 100, and is invisible to the user. For example, the bending portion 122b may be located in the first accommodation cavity 13. In addition, as shown in FIG. 5B, there is a distance H between an edge of the bending portion 122b and an edge of the display portion 122a. H = H1 + H2, H1 is a dimension of a non-bending region of the bending portion 122b, H2 is a maximum dimension required for bending of the bending portion 122b, and H2 may be determined based on a material, a thickness, and the like of the bending portion 122b. A value of H may range from 0.9 mm to 1.3 mm. For example, in this embodiment of this application, H is 1.1 mm.

The screen 12 may further include the cover plate 121. The cover plate 121 may be, for example, a cover glass (cover glass, CG). The cover plate 121 covers the display portion 122a, to protect the display portion 122a. In some embodiments, a polarizer and an optical clear adhesive may further be stacked between the cover plate 121 and the display module 122. The polarizer is used to control a propagation direction and a polarization state of light, thereby enabling the screen 12 to adjust a display brightness and a contrast ratio.

With reference to FIG. 5A, in this embodiment of this application, the bent portion 122b is disposed at the bottom of the first body 10. In other words, along the Y direction, the bending portion 122b is closer to the bottom wall 112 than the top wall 111. This is because, to improve an aesthetic degree of the electronic device 100, a non-display region is disposed between an edge of the display portion 122a and the middle frame 11, to shield the internal structure of the electronic device 100. As described above, because the antenna may be disposed on the left side wall 113, the right side wall 114, and/or the top wall 111 of the middle frame 11, an avoidance distance d needs to be maintained between the display module 122 and the left side wall 113, the right side wall 114, and/or the top wall 111, to prevent the display module 122 from interfering with the antenna and affecting performance of the antenna.

Because there is the distance H between the edge of the bending portion 122b and the edge of the display portion 122a, if the bending portion 19 is disposed at the top, the left side, or the right side of the first body 10, a width w1 of a top non-display region, a width w2 of a left non-display region, or a width w3 of a right non-display region needs to be greater than or equal to d + H. In this way, a screen-to-body ratio (for example, a ratio of a displayable region of the screen 12 to an entire area of the first body 10) of the screen 12 of the first body 10 in the electronic device 100 is reduced, and an appearance is not sufficiently beautiful.

In this embodiment, in consideration of that no antenna is disposed on the bottom wall 112, the bending portion 122b of the screen 12 is disposed at the bottom of the first body. In this way, the avoidance distance d for the antenna does not need to be reserved between the bending portion 122b and the bottom wall 112, and a width w4 of a bottom non-display region only needs to be greater than or equal to the dimension H of the bending portion. A width of a non-display region in another position (for example, the top non-display region, the left non-display region, or the right non-display region) only needs to be greater than or equal to the avoidance distance d for the antenna. Therefore, the width of the non-display region of the first body 10 can be reduced, the screen-to-body ratio of the first body 10 can be increased, and aesthetics of the first body 10 of the electronic device 100 can be improved.

It may be understood that disposing the bending portion 122b at the bottom of the first body 10 is merely an example. In some other embodiments, if the excessively large non-display region of the first body 10 is not considered, or for other reasons, the bending portion 122b may be alternatively disposed at another position, for example, the top or the left side of the first body 10. In this embodiment of this application, the position of the bending portion 122b is not limited.

With reference to FIG. 5A and in combination with FIG. 3B, the screen 12 is electrically connected to the main board 14 through a second circuit board, so that the screen 12 can receive a control signal from the main board 14. In this embodiment, the second circuit board is a flexible printed circuit board (flexible printed circuit board, FPC) 17. For ease of observation, FIG. 3B shows an outline of the flexible printed circuit board by using a dashed line. With reference to FIG. 3B, an end of the bending portion 19 of the display module 122 of the screen 12 is electrically connected to the flexible printed circuit board 17. In addition, along the Z direction, the flexible printed circuit board 17 may be disposed between the main board 14 and the display module 122 (that is, the flexible printed circuit board 17 may cover above the main board 14 and the battery assembly 15). In addition, a projection of the flexible printed circuit board 17 along the Z direction may at least partially overlap projections of the main board 14 and the battery module 15 along the Z direction.

Still with reference to FIG. 5A and FIG. 3B, in this embodiment of this application, the screen 12 may further include a screen chip 123 (which is alternatively referred to as a "screen IC") electrically connected to the display module 122. The screen chip 123 may receive a control instruction from the main board 14 and control the display portion 122a according to the control instruction. For example, the screen chip 123 controls a color, brightness, and the like of each pixel of the display portion 122a, to enable the display portion 122a to display a predetermined image.

The screen chip 123 may be disposed on the bending portion 122b. For example, the bending portion 122b has a surface facing away from the display portion 122a, and the screen chip 123 may be disposed on the surface. The screen chip 123 may be electrically connected to the cable in the bending portion 122b, and is electrically connected to the display portion 122a and the flexible printed circuit board 17 through the cable in the bending portion 122b. It may be understood that, in this embodiment, because the bending portion 122b is located at the bottom of the first body 10, the screen chip 123 is also located at the bottom of the first body 10 of the electronic device 100. In other words, along the Y direction, the screen chip 123 is closer to the bottom wall 112 than the top wall 111.

In addition, as shown in FIG. 3B, along the Y direction, the screen chip 123, the battery assembly 15, and the main board 14 may be arranged sequentially. For example, along an XY plane, positions of the main board 14, the battery assembly 15, and the screen chip 123 do not overlap. However, this application is not limited thereto. In another embodiment, the screen chip 123, the battery assembly 15, and the main board 14 may alternatively be arranged in another manner. For example, the battery assembly 15 and the main board 14 are arranged side by side along the X direction. In addition, there may be no middle frame panel between the screen 12 and the main board 14 and between the screen 12 and the battery assembly 15 for isolation.

In some other embodiments, the screen 12 may alternatively not be the flexible screen. In this embodiment, portions of the display module 122 of the screen 12 may be located in a same plane (that is, the display module 122 does not include the bending portion 122b). In this embodiment, the screen chip 123 may not be disposed on the display module 122, but is electrically connected to the display module 122 through another component (for example, a flexible printed circuit board).

Still with reference to FIG. 3B and FIG. 3C, in some embodiments of this application, the electronic device 100 may further include one or more screen components 18, and each of the screen components 18 may be electrically connected to the screen 12 (for example, electrically connected to the display module 122 and/or the screen chip 123 of the screen 12). The screen component 18 may be located in the first accommodation cavity 13. For example, the screen component 18 may be disposed on a surface of the flexible printed circuit board 17 and is electrically connected to the screen 12 through the flexible printed circuit board 17. In some other embodiments, the screen component 18 may alternatively be electrically connected to the screen 12 in another manner, for example, be electrically connected to the screen 12 by using an enameled wire.

FIG. 6 shows an exemplary arrangement manner of the screen component 18. FIG. 6 is a cross section view of D-D in FIG. 3B. For ease of observation, the first portion 152a of the protection board 152 is circled in FIG. 6 by a dashed line.

With reference to FIG. 6 and in combination with FIG. 3B and FIG. 3C, in this embodiment, at least a part of the screen components 18 are stacked with the first portion 152a of the protection board 152 in the Z direction. For example, the screen components 18 include one or more first components 181, and the first components 181 may be stacked with the first portion 152a of the protection board 152. In other words, a projection of the first component 181 along the Z direction at least partially overlaps a projection of the first portion 152a of the protection board 152 along the Z direction. In some embodiments, all the projection of the first component 181 along the Z direction is located within a range of the projection of the first portion 152a of the protection board 152 along the Z direction. In some other embodiments, the projection of the first component 181 along the Z direction is partially located within the range of the projection of the first portion 152a of the protection board 152 along the Z direction. In addition, the projection of the first component 181 along the Z direction may not overlap the projection of the battery 151 along the Z direction. In addition, the first component 181 may be stacked between the flexible printed circuit board 17 and the first portion 152a of the protection board 152.

In other words, in this embodiment, thickness space of the position of the protection board 152 is fully used to arrange the screen components 18, so that the screen components 18 can be prevented from occupying thickness space of the battery 151 (to be specific, the projection of the screen component 18 along the Z direction may not overlap the projection of the battery 151 along the Z direction), to avoid reducing a thickness of the battery 151, thereby improving standby time of the electronic device 100.

In some embodiments, as shown in FIG. 6, a thickness of the first portion 152a of the protection board 152 may be less than the thickness of the battery 151. In this embodiment, the first component 181 may have larger space for arrangement. However, this application is not limited thereto. In another embodiment, the thickness of the first portion 152a of the protection board 152 may be basically the same as or even slightly greater than the thickness of the battery 151. Because an avoidance distance required between the protection board 152 and the screen component 18 in the thickness direction is less than an avoidance distance between the battery 151 and the screen component 18, even if the thickness of the first portion 152a is equal to or greater than the thickness of the battery 151, space above the protection board 152 can be used to arrange the screen components 18, to prevent the screen components 18 from occupying the thickness space of the battery 151.

In addition, in consideration of that, in some electronic devices 100, space above the protection board 152 is limited, a part of the screen components 18 may be stacked with other components than the battery assembly 15. For example, with reference to FIG. 3B, FIG. 3C, and FIG. 6, in some embodiments, the screen components 18 may further include one or more second components 182, and a projection of the second component 182 along the Z direction does not overlap the battery assembly 15. For example, the second component 182 may be stacked with the main board 14 along the Z direction. For instance, the second component 182 may be stacked between the main board 14 and the flexible printed circuit board 17.

It may be understood that, in some other embodiments, if the space above the first portion 152a of the protection board 152 can accommodate all the screen components 18, all the screen components 18 and the first portion 152a of the protection board 152 may be stacked along the Z direction.

In this embodiment, the first component 181 may be a power supply protection component of the screen 12, for example, a voltage stabilization capacitor of a power supply of the screen 12, or a filter capacitor of the power supply of the screen 12. For example, the voltage stabilization capacitor of the power supply of the screen 12 can stabilize a power supply voltage, to improve stability of a voltage input to the screen 12. The filter capacitor of the power supply of the screen 12 may filter out highfrequency noise in the power supply, to improve stability and reliability of a current input to the screen 12.

The second component 182 may be a touch control function control component of the screen 12, for example, a touch control chip, a touch control protection component, or a clock chip. For example, the touch control chip may process a touch control signal on the screen 12 and convert the touch control signal into a digital signal. The touch control protection component may be configured to protect the touch control chip, to prevent static electricity from damaging the touch control chip. The clock chip may be connected to a plurality of touch control chips, to maintain clock synchronization between the plurality of touch control chips.

In this embodiment, it is considered that the first component 181 is a component that needs to be connected as near as possible to the screen chip 123. For example, when the voltage stabilization capacitor of the power supply of the screen 12 is far away from the screen chip, a voltage stabilization effect of the voltage stabilization capacitor deteriorates, and the screen 12 has problems such as horizontal strips. Therefore, in this embodiment, the first component 181 is stacked with the protection board 152, and the second component 182 is stacked with the main board 14, so that a distance between the first component 181 and the screen chip 123 is less than a distance between the second component 182 and the screen chip 123. It may be understood that, in another embodiment, when the main board 14 and the battery assembly 15 are arranged in another manner (for example, when the main board 14 is located below the battery assembly 15), the first component 181 may alternatively be stacked with the main board 14, and the second component 182 may be stacked with the protection board 152 of the battery 151.

In conclusion, this embodiment of this application provides the electronic device. At least a part of the screen components are stacked with the protection board of the battery, so that occupation in the thickness space of the battery can be avoided, to avoid reducing the thickness of the battery, thereby improving the standby time of the electronic device.

In the foregoing descriptions of this embodiment, unless otherwise stated, "/" indicates a meaning of "or", for example, A/B may indicate A or B. The term "and/or" in this specification shows merely an association relationship for describing associated objects, and indicates that three relationships may exist. For example, A and/or B may indicate three cases: only A exists, only B exists, and both A and B exist.

In the descriptions of this application, it should be noted that an orientation or a positional relationship indicated by terms such as "center", "upper", "lower", "left", "right", "vertical", "horizontal", "outer", "inner", "peripheral", "radial", and "axial" is an orientation or a positional relationship based on the accompanying drawings, and is merely used for ease of describing this application and simplifying description, but is not intended to indicate or imply that the indicated apparatus or element needs to have a specific orientation, and is constructed and operated in the specific orientation, and therefore cannot be understood as a limitation to this application.

It is clear that a person skilled in the art may make various modifications and variations to this application without departing from the spirit and scope of this application. In this way, if these modifications and variations made to this application fall within the scope of the claims of this application and equivalent technologies thereof, this application is also intended to include these modifications and variations.

## Claims

1. An electronic device, comprising:
a screen and a housing, the screen and the housing being oppositely disposed along a thickness direction of the electronic device, to enclose an accommodation cavity of the electronic device;
a battery assembly, the battery assembly being disposed in the accommodation cavity and being stacked with the screen along the thickness direction; and the battery assembly comprising a battery and a protection board of the battery, at least a first portion of the protection board being disposed on a side of the battery along a first direction, and the first direction being perpendicular to the thickness direction; and
one or more screen components, the screen component being electrically connected to the screen, and at least a part of the one or more screen components being stacked with the first portion of the protection board along the thickness direction.

2. The electronic device according to claim 1, wherein the one or more screen components comprise a first component and a second component, one of the first component and the second component is stacked with the first portion of the protection board along the thickness direction, and a projection of the other of the first component and the second component along the thickness direction does not overlap a projection of the battery assembly along the thickness direction.

3. The electronic device according to claim 2, wherein the screen comprises a display module and a screen chip disposed on the display module, and the screen chip is located in the accommodation cavity;
the first component and the second component are both electrically connected to the screen chip, and a distance between the first component and the screen chip is less than a distance between the second component and the screen chip, wherein
the first component is a power supply protection component of the screen, and the second component is a touch control function control component of the screen.

4. The electronic device according to claim 3, wherein the first component is one of the following: a voltage stabilization capacitor of a power supply of the screen and a filter capacitor of the power supply of the screen; and/or
the second component is one of the following: a touch control chip, a touch control protection component, and a clock chip.

5. The electronic device according to any one of claims 2 to 4, wherein the electronic device comprises a first circuit board and a second circuit board, the screen is electrically connected to the first circuit board through the second circuit board, and the one or more screen components are disposed on the second circuit board.

6. The electronic device according to claim 5, wherein the screen chip, the battery assembly, and the first circuit board are sequentially arranged along a length direction of the electronic device, wherein
the first component is stacked with the protection board, and the second component is stacked with the first circuit board.

7. The electronic device according to claim 5, wherein the first circuit board is a main board of the electronic device, and/or the second circuit board is a flexible printed circuit board.

8. The electronic device according to claim 1, wherein the first direction is a width direction of the electronic.

9. The electronic device according to claim 3, wherein the housing comprises a first side wall and a second side wall that are oppositely disposed along a length direction of the electronic device, the second side wall is closer to the screen chip than the first side wall, and an antenna of the electronic device is disposed on the first side wall.

10. The electronic device according to claim 9, wherein the housing comprises a third side wall and a fourth side wall that are oppositely disposed along a width direction of the electronic device, and the antenna of the electronic device is disposed on the third side wall and/or the fourth side wall.

11. The electronic device according to claim 1, wherein the screen is a flexible screen, the screen comprises a display portion and a bending portion connected to the display portion, the bending portion is located in the accommodation cavity, and the screen chip is disposed on the bending portion.

12. The electronic device according to claim 1, wherein a thickness of the first portion of the protection board is less than a thickness of the battery.
